# FASCICULE DE BREVET EUROPEEN

(11) **EP 1 324 056 B1**
(45) Date de publication et mention de la délivrance du brevet: **16.04.2008**
(21) Numéro de dépôt: 02102723.0
(22) Date de dépôt: 11.12.2002
(51) Int. Cl.: G01R 13/34, H04B 10/155, G02F 1/313

(54) **Dispositif de génération d'impulsion optique à fort taux d'extinction et système d'échantillonnage notamment de signaux hyperfréquence**
Optischer Impulsgeber mit hoher Extinktionsrate und Abtastsystem insbesondere für Mikrowellensignale
High extinction ratio optical pulse generator and sampling device especially for microwave signals

(30) Priorité: 18.12.2001 FR 0116393
(43) Date de publication de la demande: 02.07.2003
(73) Titulaire: Thales, 75008 Paris (FR)
(72) Inventeur: Formont, Stéphane, 94117 CX, ARCUEIL (FR); Chazelas, Jean, 94117 CX, ARCUEIL (FR); Auvray, Gérard, 94117 CX, ARCUEIL (FR)
(74) Mandataire: Lucas, Laurent Jacques

(56) Documents cités:
- WO-A-00/73848
- US-A- 4 505 587
- DEVAUX F ET AL: "Tandem of modulators for high on/off pulse generation (-55 dB)" ELECTRONICS LETTERS, IEE STEVENAGE, GB, vol. 33, no. 17, 14 août 1997 (1997-08-14), pages 1491-1492, XP006007830 ISSN: 0013-5194
- YAMADA E ET AL: "GENERATION OF TERABIT PER SECOND OPTICAL DATA PULSE TRAIN" ELECTRONICS LETTERS, IEE STEVENAGE, GB, vol. 31, no. 16, 3 août 1995 (1995-08-03), pages 1342-1344, XP000524974 ISSN: 0013-5194
- PATENT ABSTRACTS OF JAPAN vol. 1995, no. 05, 30 juin 1995 (1995-06-30) & JP 07 049511 A (NIPPON TELEGR & TELEPH CORP), 21 février 1995 (1995-02-21)
- SWANSON E A ET AL: "40-GHZ PULSE TRAIN GENERATION USING SOLITON COMPRESSION OF A MACH-ZEHNDER MODULATOR OUTPUT" IEEE PHOTONICS TECHNOLOGY LETTERS, IEEE INC. NEW YORK, US, vol. 7, no. 1, 1995, pages 114-116, XP000488135 ISSN: 1041-1135
- KAMAN V ET AL: "INTEGRATED TANDEM TRAVELING-WAVE ELECTROABSORPTION MODULATORS FOR >100 GBIT/S OTDM APPLICATIONS" IEEE PHOTONICS TECHNOLOGY LETTERS, IEEE INC. NEW YORK, US, vol. 12, no. 11, novembre 2000 (2000-11), pages 1471-1473, XP000981067 ISSN: 1041-1135

## Description

La présente invention concerne un dispositif de génération d'impulsions à fort taux d'extinction permettant d'obtenir des impulsions courtes avec une fréquence de répétition élevée. Ce dispositif s'applique notamment à l'échantillonnage de signaux hyperfréquence.

L'échantillonnage de signaux nécessite notamment de disposer d'une source de signaux impulsionnels, l'échantillonnage étant par exemple synchrone du front montant des impulsions générées. L'échantillonnage doit par ailleurs respecter la condition de Shannon. Plus la fréquence du signal à échantillonner est élevée, plus la fréquence des impulsions d'échantillonnage doit être élevée et plus leur durée doit être faible. En pratique celle-ci doit être deux fois supérieure à la fréquence du signal à échantillonner. Dans un cas d'échantillonnage d'un signal de haute fréquence, pour obtenir un échantillonnage satisfaisant le signal impulsionnel échantillonneur doit présenter un fort taux d'extinction, ce dernier caractérisant en fait le rapport entre la valeur crête d'une impulsion et sa valeur minimum (le zéro de l'impulsion). On peut aussi caractériser le taux d'extinction en terme de puissance, par le rapport entre la puissance du signal en présence d'une impulsion et la puissance résiduelle de signal en l'absence d'impulsion.

Pour réaliser des dispositifs d'échantillonnage de signaux à haute fréquence, on a communément recours à des commutateurs opto-électroniques commandés par une source lumineuse pulsée.
Des dispositifs d'échantillonnage à base de commutateurs opto-électroniques sont notamment décrits dans les articles suivants :
D.H. AUSTON : "picosecond optoelectronic switching and gating in silicon", Applied physics Letters, 1975, Vol. 26 (3), pp. 341-345.
R.Mason and J.T. Taylor : "Design and evaluation of an optically triggered monolithic sample and hold circuit using GaAs MESFET technology", Journal of Lightwave Technology, 1995, Vol. 13 (3), pp. 422-429.

Ces méthodes plus ou moins complexes de réalisation permettent d'obtenir des impulsions optiques très courtes : de quelques centaines de femtosecondes (une femtoseconde est égale à 10⁻¹⁵ s) à plusieurs centaines de picosecondes ( une picoseconde est égale à 10⁻¹² s) avec des fréquences de répétition pouvant atteindre 10GHz. En revanche, les sources optiques pulsées utilisées présentent toutes un inconvénient majeur. Celui-ci réside dans la chute rapide du taux d'extinction des sources pulsées quand la fréquence de répétition des impulsions devient très grande. Typiquement, pour des sources fonctionnant à des fréquences de répétition allant jusqu'à 100MHz, un taux d'extinction de 40dB semble être une limite. Au-delà le taux décroît très vite et la puissance résiduelle devient gênante.

Le dispositif selon l'invention est définie par la revendication 1. Le document F. Devaux, Electronics letters vol 33, no 7 Août 1997. pages 1491-1492 décrit un dispositif selon le préambule de la revendication 1.

L'invention a également pour objet un système d'échantillonnage qui comporte un dispositif tel que décrit dans la revendication 1.
Ce système d'échantillonnage comporte une source optique modulable par un signal. Le signal électrique à échantillonner est utilisé comme signal de modulation. La puissance du signal émis vers l'entrée du commutateur électro-optique est ainsi l'image, transposée en fréquence optique, du signal électrique à échantillonner. On obtient en sortie du commutateur électro-optique un signal correspond au signal électrique, échantillonné et transposé en fréquence optique.

Avantageusement, si l'écart de temps Δt entre les impulsions délivrées par les générateurs est fixé à un quart de la période d'échantillonnage on obtient en sorties des dispositifs de conversion analogique - numérique, les images numériques des composantes en phase "I" et en quadrature "Q" du signal à échantillonner.

Avantageusement, si l'écart de temps Δt entre les impulsions délivrées par les générateurs est fixé à une demi-période d'échantillonnage, on double la fréquence d'échantillonnage par traitement du signal à échantillonner sur deux voies parallèles.

L'invention a donc notamment pour principaux avantages :
- D'étendre le domaine d'utilisation des sources pulsées existantes vers des fréquences de répétition élevées, tout en conservant un bon taux d'extinction;
- D'étendre le domaine d'application des sources optiques pulsées à l'échantillonnage direct de signaux hyperfréquence.

D'autres caractéristiques et avantages de l'invention apparaîtront à l'aide de la description qui suit, faite en regard des dessins annexés qui représentent :
La figure 1, l'illustration d'un dispositif de génération d'impulsions optiques à fort taux d'extinction.
La figure 2, l'illustration d'un dispositif de génération d'impulsions optiques comportant deux sorties décalées dans le temps.
La figure 3, l'illustration d'une utilisation possible du dispositif pour améliorer le taux d'extinction d'une source laser pulsée. La figure illustre le cas où la largeur de l'impulsion qui commande le modulateur est du même ordre de grandeur que celle de l'impulsion optique.
La figure 4, l'illustration d'une utilisation possible du dispositif selon la figure 3, en vue d'améliorer le taux d'extinction d'une source laser pulsée, La figure illustre le cas où la largeur de l'impulsion qui commande le modulateur, est supérieure à celle de l'impulsion optique.
La figure 5, l'illustration d'un système d'échantillonnage de signaux hyperfréquence.
La figure 6, l'illustration d'un système d'échantillonnage double de signaux hyperfréquence utilisant le dispositif selon l'invention.

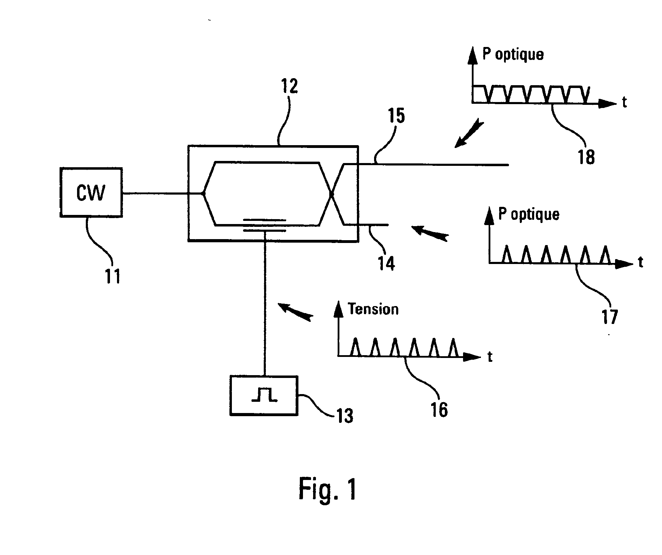

La figure 1 est la représentation schématique d'un exemple d'architecture possible, d'un dispositif de génération d'impulsions. Il comporte une source optique 11 qui peut être une source continue quelconque, par exemple une diode laser, dont la puissance de sortie est constante. La sortie de cette source est raccordée par fibre optique à un modulateur électro-optique 12, de type Mach-Zehnder par exemple, dont l'entrée de modulation est attaquée par un système générateur d'impulsions électriques 13.

Un modulateur Mach-Zehnder fonctionne par interférométrie. Un signal lumineux présent à son entrée est divisé en deux. Les deux signaux ainsi produits sont véhiculés par deux voies différentes : une voie de longueur fixe, et une voie modulée, dont la longueur optique dépend de la tension présente sur son entrée de polarisation. Ces deux signaux sont ensuite recombinés par interférence et dirigés sur deux sorties complémentaires.

Un avantage du modulateur Mach-Zehnder est notamment qu'il peut être polarisé de telle sorte qu'à partir d'un signal de puissance constante présent à son entrée, l'une de ses sorties 14 délivre une puissance optique pratiquement nulle (Interférence destructrice) et l'autre 15 la puissance maximum.

L'ensemble représenté par la figure 1 fonctionne comme indiqué par la suite.
La source laser émet un signal optique continue qui entre dans un modulateur électro-optique de type Mach-Zehnder polarisé comme indiqué précédemment.
Sur l'entrée de modulation on applique un signal 16 issu d'un système générateur d'impulsions électriques 13. Ce signal a pour effet de modifier la longueur optique de la voie modulée. De la sorte, au passage de chaque impulsion électrique, on obtient en sortie 14 une impulsion optique 17 de même durée que l'impulsion électrique. Simultanément, on obtient sur la sortie complémentée 15 un signal optique 18 dont la puissance s'annule pendant cette même durée.
Le générateur d'impulsions électriques peut être par exemple un équipement complètement électronique ou encore être constitué d'une source optique pulsée commandant un commutateur opto-électronique.

Ce dispositif réalise donc à partir d'une source optique continue d'un générateur d'impulsions électriques approprié, une source optique impulsionnelle générant des impulsions très courtes avec une fréquence de répétition élevée. Les essais réalisés par la déposante ont montré que l'emploi d'un modulateur de type Mach-Zehnder permet d'obtenir avantageusement un taux d'extinction élevé.

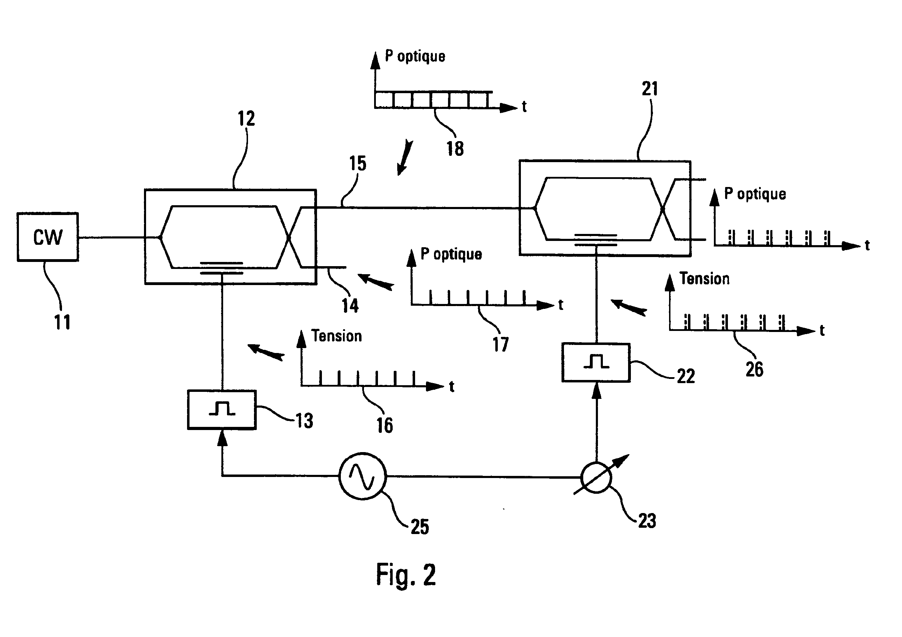

La figure 2 est la représentation schématique d'un dispositif selon l'invention. La sortie 15 du montage précédent est reliée à l'entrée d'un deuxième modulateur électro-optique 21 de type Mach-Zehnder. Celui-ci est polarisé comme le précédent, et son l'entrée de modulation est attaquée par un deuxième générateur d'impulsions électriques 22. Les deux générateurs fournissent des impulsions identiques en durée et en fréquence de répétition. Ils sont synchronisés par une même horloge primaire 25.
Le générateur d'impulsions 22 est associé à un circuit déphaseur variable 23 qui permet d'affecter un retard Δt aux impulsions générées. Il fournit ainsi des impulsions électriques identiques à celles du générateur 13, mais décalées d'un temps Δt. Ces impulsions attaquent l'entrée de modulation du deuxième modulateur 21. En passant dans ce dernier le signal 18 issue du premier modulateur donne en sortie un signal optique impulsionnel 27. Ce signal optique est identique au signal 17 issu du premier modulateur mais décalé dans le temps de Δt.

On obtient donc ainsi une source optique pulsée à deux sorties, fournissant deux signaux impulsionnels décalés dans le temps dont on peut maîtriser le décalage.
Avantageusement, ce dispositif tire parti de la puissance de signal optique disponible sur la sortie complémentaire du premier modulateur, puissance non utilisée dans le cas d'une source pulsée simple.

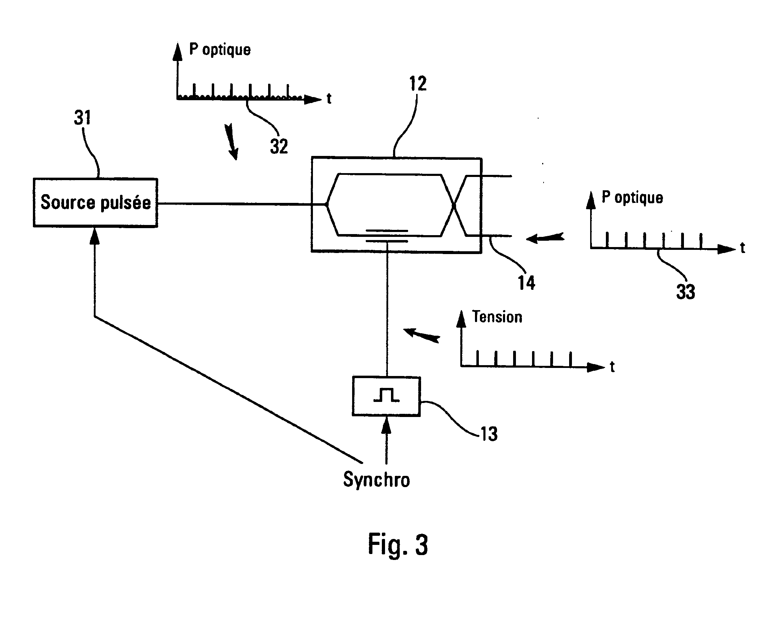

La figure 3 Illustre une variante possible d'utilisation du dispositif selon la figure 1 pour réaliser une source optique pulsée à fort taux d'extinction à partir d'une source optique pulsée classique.
La source pulsée 11 génère un signal optique impulsionnel 32 qui présente en dehors des impulsions recherchées un résidu parasite de signal, consécutif à l'extinction incomplète de la source. Ce signal est transmis à l'entrée d'un modulateur 12 de type Mach-Zehnder, polarisé comme précédemment. L'entrée de modulation de ce dernier est attaquée par un système générateur d'impulsions électriques synchronisé sur les impulsions émises par la source. Les impulsions électriques ont une largeur identique aux impulsions optiques émises.
Après modulation on obtient sur la sortie 14 du modulateur un signal optique impulsionnel 33 débarrassé des résidus parasites. Ce dispositif peut donc avantageusement être employé pour améliorer sensiblement le taux d'extinction d'une source pulsée existante. Le type de générateur d'impulsions électriques employé est variable selon la durée et la fréquence des impulsions optiques que l'on souhaite isoler du signal résiduel. Selon les cas, on peut par exemple utiliser un système électronique ou une source optique pulsée attaquant un commutateur opto-électronique.
Comme précédemment, il est évidemment possible d'utiliser la sortie 15 du modulateur pour réaliser une double génération d'impulsion.

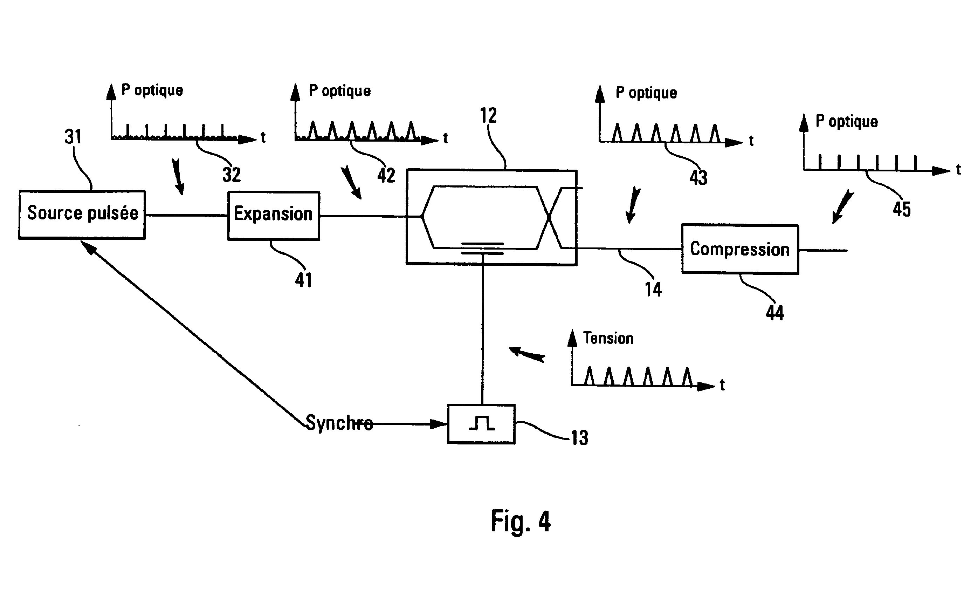

La figure 4 illustre une adaptation possible du dispositif de la figure 3 au cas où le signal optique pulsé est constitué d'impulsions extrêmement fines dont la largeur est inférieure à celle des impulsions électriques les plus fines que peut produire le générateur d'impulsions électriques.
Dans ce cas il n'est pas possible de filtrer le signal résiduel parasite avec le dispositif de la figure 3 par modulation directe des impulsions qui constituent le signal optique. On complète donc le dispositif de la figure 3 en ajoutant un dispositif supplémentaire d'expansion / compression du signal optique.
On procède donc d'abord à une expansion du signal optique 32 au moyen par exemple d'une fibre optique dispersive 41. On obtient ainsi un signal optique composé d'impulsions suffisamment larges pour être compatibles des performances du générateur d'impulsions électriques qui attaque le modulateur. Après expansion, le signal se présente sous la forme 42 d'une suite d'impulsions élargies, toujours accompagnées d'un signal résiduel parasite. Le signal 42 est transmis à l'entrée du modulateur 12 de type Mach-Zehnder polarisé de la même façon que dans les applications précédentes. L'entrée de modulation de ce dernier est attaquée par le générateur d'impulsions électriques 13. La largeur des impulsions électriques est égale à celle des impulsions optiques élargies.
Comme dans le cas de la figure 3, on obtient en sortie du modulateur un signal optique 43. Celui-ci est composé d'impulsions, isolées du signal résiduel, auxquelles on restitue leur largeur initiale en les faisant traverser un dispositif 44 de compression du signal. On obtient finalement un signal 45 constitué d'impulsions identiques à celle du signal 32, et débarrassé du signal résiduel.
Cette variante du dispositif selon l'invention permet donc avantageusement de générer des impulsions optiques extrêmement brèves, de quelques centaines de femtosecondes par exemple, ayant un fort taux d'extinction.

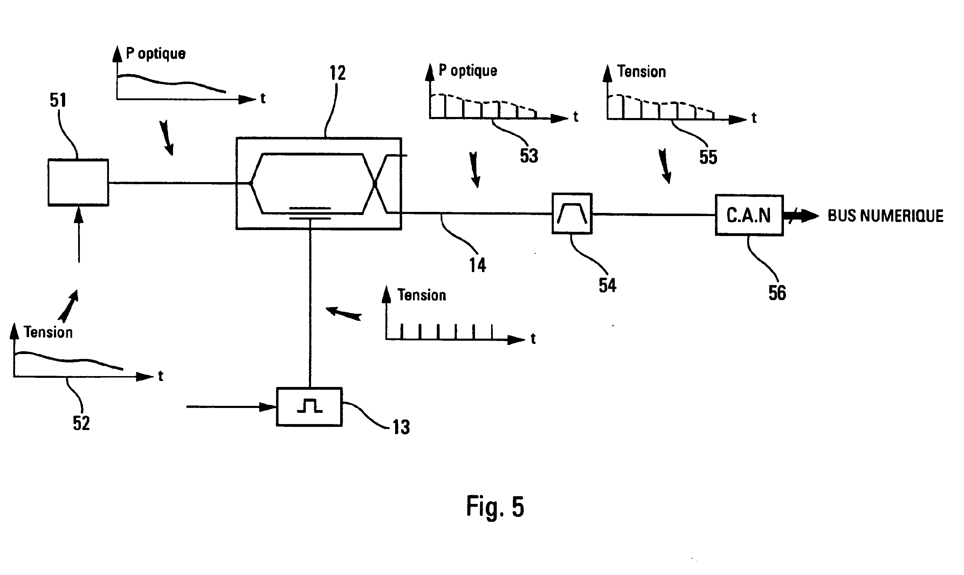

La figure 5 illustre une utilisation possible du dispositif selon la figure 1, dans un système d'échantillonnage direct d'un signal, par exemple hyperfréquence.
Dans cette application la source optique continue de la figure 1 est remplacée par une source optique modulable 51. Le dispositif est par ailleurs complété par un dispositif photo-détecteur 54 relié à la sortie du commutateur électro-optique. La sortie du photo-détecteur est elle-même reliée à un dispositif de conversion analogique - numérique rapide 56. L'ensemble fonctionne comme indiqué par la suite.
La source optique 51 est modulée par un signal hyperfréquence 52. Cette modulation peut être réalisée directement en utilisant une source modulable ou par l'intermédiaire d'une source continue et d'un modulateur électro-optique. Le signal optique modulé en amplitude par le signal hyperfréquence passe ensuite dans le modulateur 12 dont l'entrée de modulation est attaquée par le générateur d'impulsions 13.
Sur la sortie 14 du modulateur on retrouve le signal optique d'entrée, découpé en impulsions dont la puissance varie conformément au signal de modulation : au passage d'une impulsion électrique le signal de sortie recopie le signal d'entrée et entre deux impulsions le signal de sortie a une puissance nulle. Le signal 53 obtenu est donc équivalent au signal hyperfréquence échantillonné et transposé en fréquence optique.
Ce signal traverse ensuite le dispositif photo-détecteur 54 où il subit la transposition inverse. Le signal 55 obtenu, qui n'est autre que le signal hyperfréquence 52 échantillonné, est ensuite numérisé par un dispositif 56 de conversion analogique - numérique rapide. L'opération de conversion est synchronisée avec l'échantillonnage du signal.
Naturellement, le dispositif 56 connu par ailleurs, comporte notamment en entrée un système bloqueur dont le rôle est de maintenir la valeur de chaque échantillon de signal à numériser, présente pendant toute l'opération de conversion.
Un avantage de ce système d'échantillonnage est qu'il opère sur un signal n'ayant subi aucune opération préalable de transposition en basse ou moyenne fréquence. Il concourt donc à rendre plus simple le traitement du signal avant numérisation.

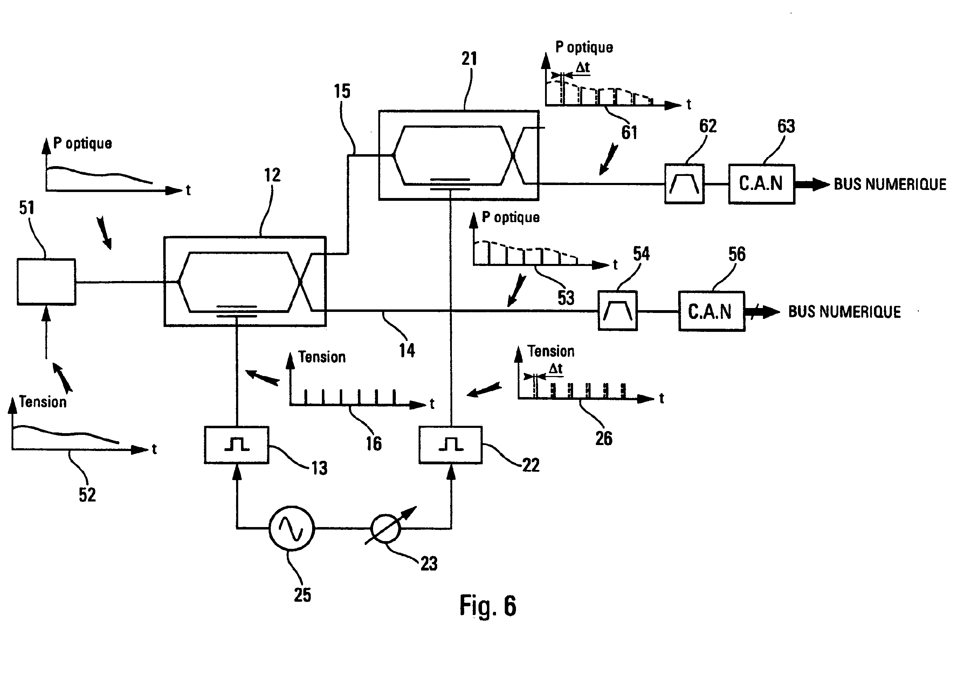

La figure 6 illustre une utilisation possible du dispositif tel que décrit à la figure 2 dans un système de double échantillonnage direct d'un signal, par exemple hyperfréquence.
Une source optique pulsée à deux impulsions décalées dans le temps est utilisée pour réaliser le double échantillonnage direct d'un signal hyperfréquence. Le système représenté à la figure 5 est ici étendu aux deux sorties du modulateur électro-optique 12.
Comme précédemment, le signal optique continu généré par la source 51 est modulé par le signal hyperfréquence 52 et transmis à l'entrée du modulateur 12. Comme précédemment sur la sortie 14 on retrouve le signal optique modulé par le signal hyperfréquence et découpé au rythme des impulsions électriques.
Ce signal 53 est équivalent au signal hyperfréquence échantillonné et transposé en fréquence optique.
Démodulé par le photo-détecteur 54 ce signal est ensuite numérisé par le dispositif 56 dont le début de conversion est synchrone des impulsions électriques qui attaquent le modulateur 12.
Parallèlement le signal porté par la sortie 15 du modulateur 12, non utilisé dans le cas précédent, subi le même traitement que le signal présent à l'entrée du modulateur 12. Il est transmis à l'entrée d'un modulateur 21 dans lequel il est découpé au rythme d'impulsions électriques identiques à celles qui attaquent le modulateur 12, mais décalées dans le temps. On obtient un signal optique échantillonné 61. Ce signal est équivalent au signal hyperfréquence échantillonné et transposé, l'échantillonnage ayant cependant été effectué à des instants différents de ceux d'obtention du signal 53.
Ce signal, démodulé par le photo-détecteur 62, est ensuite numérisé par le dispositif 63. de conversion analogique - numérique rapide dont le début de conversion est synchrone des impulsions électriques qui attaquent le modulateur 21. Comme le dispositif 56, le dispositif 63 comporte notamment un bloqueur à son entrée.

Ce dispositif fournit donc deux représentations numériques simultanées du signal hyperfréquence initial, échantillonné à des instants différents. Selon l'application envisagée, la valeur du retard Δt entre les deux voies d'échantillonnage peut être différente. Ce retard est réglé par le circuit déphaseur 23.

Avantageusement ces deux voies de numérisation peuvent être utilisées pour obtenir par entrelacement des données numériques, une cadence d'échantillonnage double de celle obtenue avec une seule voie. Dans ce cas l'écart Δt entre les deux voies doit être égal à une demi-période d'échantillonnage.

L'écart Δt entre les deux voies peut également être pris égal à un quart de période d'échantillonnage. On obtient alors deux représentations numériques du signal. La première est issue de la voie échantillonnée prise comme référence, par exemple la sortie 14 du premier modulateur. la seconde provient de la voie échantillonnée avec un retard d'un quart de période. La première voie est communément appelée "voie en phase" ou "voie I" et la seconde "voie en quadrature" ou "voie Q".
Le choix d'une valeur de Δt égale à un quart de la période d'échantillonnage permet donc avantageusement de conserver l'information de phase du signal hyperfréquence échantillonné.

Le dispositif selon l'invention peut également être utilisé pour d'autres applications que l'échantillonnage de signal et notamment dans la réalisation de sources optiques pulsées à fort taux d'extinction.

## Revendications

1. Dispositif de génération d'impulsions à fort taux d'extinction comportant au moins une source optique (11), deux commutateurs électro-optiques (12, 21) cascadés et deux générateurs d'impulsions électriques (13, 22) dont les sorties respectives sont reliées chacune à l'entrée de commande d'un commutateur, **caractérisé en ce que** les deux générateurs d'impulsions électriques (13 et 22) sont synchronisés et génèrent des impulsions électriques de commande décalées d'un temps Δt, de sorte que le dispositif délivre deux séries d'impulsions optiques à fort taux d'extinction décalées dans le temps de At.

2. Dispositif selon la revendication 1, **caractérisé en ce que** les commutateurs électro-optiques (12, 21) sont des modulateurs de type Mach-Zehnder, polarisés de façon à ne délivrer aucun signal sur une de leurs sorties s'ils ne reçoivent pas de signal de modulation.

3. Dispositif selon l'une des revendications 1 ou 2, **caractérisé en ce que** le décalage Δt est variable et contrôlé par un élément déphaseur (23).

4. Dispositif selon l'une quelconque des revendications précédentes, **caractérisé en ce que** la source optique (31) est une source pulsée.

5. Dispositif selon la revendication 4 **caractérisé en ce qu**'il comporte un système d'expansion (41) du signal placé entre la source optique et le commutateur, ainsi qu'un système de compression (44) du signal, placé en sortie du commutateur.

6. Dispositif selon l'une quelconque des revendications précédentes, **caractérisé en ce que** la source optique (51) est une source modulable.

7. Système d'échantillonnage d'un signal comportant un dispositif de génération d'impulsions selon la revendication 6, **caractérisé en ce que** la source optique (51) est modulée par le signal à échantillonner (52), de sorte que les signaux (53, 61) disponibles en sortie des commutateurs électro-optiques (12, 21) correspondent au signal de modulation (52) de la source, transposé en fréquence optique et échantillonné à deux instants décalés d'un temps Δt.

8. Système d'échantillonnage selon la revendication 7, **caractérisé en ce que** l'écart de temps Δt est fixé à un quart de la période d'échantillonnage, de telle sorte qu'aux sorties des dispositifs de conversion analogique - numérique (56 et 63) on obtienne les images numériques des composantes en phase "I" et en quadrature "Q" du signal à échantillonner.

9. Système d'échantillonnage selon la revendication 7, **caractérisé en ce que** l'écart de temps Δt est fixé à une demi-période d'échantillonnage de façon à doubler la fréquence d'échantillonnage par traitement du signal à échantillonner (52) sur deux voies parallèles.

10. Système d'échantillonnage selon l'une quelconque des revendications 7 à 9, **caractérisé en ce que** les sorties des deux commutateurs électro-optiques (12 et 21) sont reliées à des détecteurs optiques (54 et 62) et à des systèmes de conversion analogique - numérique (56 et 63).

## Claims

1. Device for generating pulses with a high extinction ratio comprising at least one optical source (11), two cascaded electro-optical switches (12, 21) and two electrical pulse generators (13, 22), the respective outputs of which are each connected to the control input of a switch, **characterized in that** the two electrical pulse generators (13 and 22) are synchronized and generate electrical control pulses offset by a time Δt, such that the device delivers two series of optical pulses with a high extinction ratio with a time delay Δt.

2. Device according to Claim 1, **characterized in that** the electro-optical switches (12, 21) are Mach-Zehnder modulators, polarized so as not to deliver any signal at one of their outputs if they are not receiving a modulation signal.

3. Device according to either of Claims 1 and 2, **characterized in that** the delay Δt is variable and controlled by a phase-shift element (23).

4. Device according to any one of the preceding claims, **characterized in that** the optical source (31) is a pulsed source.

5. Device according to Claim 4, **characterized in that** it comprises a signal expansion system (41) placed between the optical source and the switch, as well as a signal compression system (44) placed at the output of the switch.

6. Device according to any one of the preceding claims, **characterized in that** the optical source (51) is a source that can be modulated.

7. System for sampling a signal comprising a pulse generating device according to Claim 6, **characterized in that** the optical source (51) is modulated by the signal to be sampled (52), such that the signals (53, 61) available at the output of the electro-optical switches (12, 21) correspond to the modulation signal (52) of the source, shifted in optical frequency and sampled at two instants offset by a time Δt.

8. Sampling system according to Claim 7, **characterized in that** the time difference Δt is fixed at a quarter of the sampling period, such that at the outputs of the analogue-digital conversion devices (56 and 63) the digital images of the components in phase "I" and in quadrature "Q" of the signal to be sampled are obtained.

9. Sampling system according to Claim 7, **characterized in that** the time difference Δt is fixed at half the sampling period so as to double the sampling frequency by processing the signal to be sampled (52) on two parallel channels.

10. Sampling system according to any one of the claims 7 to 9, **characterized in that** the outputs of the two electro-optical switches (12 and 21) are connected to optical detectors (54 and 62) and to analogue-digital conversion systems (56 and 63).

## Patentansprüche

1. Vorrichtung zum Erzeugen von Impulsen mit hohem Extinktionsverhältnis, mit wenigstens einer Lichtquelle (11), zwei elektrooptischen Kommutatoren (12, 21), die kaskadenartig angeordnet sind, und zwei Generatoren (13, 22) für elektrische Impulse, deren jeweilige Ausgänge mit dem jeweiligen Steuereingang eines Kommutators verbunden sind, **dadurch gekennzeichnet, dass** die zwei Generatoren (13 und 22) für elektrische Impulse synchronisiert sind und elektrische Steuerimpulse erzeugen, die um eine Zeit Δt zueinander versetzt sind, derart, dass die Vorrichtung zwei Reihen von optischen Impulsen mit hohem Extinktionsverhältnis, die zeitlich um Δt versetzt sind, liefert.

2. Vorrichtung nach Anspruch 1, **dadurch gekennzeichnet, dass** die elektrooptischen Kommutatoren (12, 21) Modulatoren des Mach-Zehnder-Typs sind, die in der Weise polarisiert sind, dass sie an keinem ihrer Ausgänge ein Signal liefern, wenn sie kein Modulationssignal empfangen.

3. Vorrichtung nach einem der Ansprüche 1 oder 2, **dadurch gekennzeichnet, dass** die Verschiebung Δt variabel ist und durch ein Phasenverschiebungselement (23) gesteuert wird.

4. Vorrichtung nach einem der vorhergehenden Ansprüche, **dadurch gekennzeichnet, dass** die Lichtquelle (31) eine gepulste Quelle ist.

5. Vorrichtung nach Anspruch 4, **dadurch gekennzeichnet, dass** sie ein Signalerweiterungssystem (41), das zwischen der Lichtquelle und dem Kommutator angeordnet ist, und ein Signalkompressionssystem (44), das am Ausgang des Kommutators angeordnet ist, enthält.

6. Vorrichtung nach einem der vorhergehenden Ansprüche, **dadurch gekennzeichnet, dass** die Lichtquelle (51) eine modulierbare Quelle ist.

7. System zum Abtasten eines Signals, das eine Impulserzeugungsvorrichtung nach Anspruch 6 enthält, **dadurch gekennzeichnet, dass** die Lichtquelle (51) durch das abzutastende Signal (52) moduliert wird, derart, dass die am Ausgang der elektrooptischen Kommutatoren (12, 21) verfügbaren Signale (53, 61) dem Modulationssignal (52) für die Quelle entsprechen, das hinsichtlich der optischen Frequenz transponiert ist und zu zwei um eine Zeit Δt versetzten Zeitpunkten abgetastet wird.

8. Abtastsystem nach Anspruch 7, **dadurch gekennzeichnet, dass** die Zeitabweichung Δt auf ein Viertel der Abtastperiode festgelegt ist, derart, dass an den Ausgängen von Analog/Digital-Umsetzungsvorrichtungen (56 und 63) die digitalisierten Bilder der phasengleichen Komponente "I" und der Quadraturkomponente "Q" des abzutastenden Signals erhalten werden.

9. Abtastsystem nach Anspruch 7, **dadurch gekennzeichnet, dass** die Zeitabweichung Δt auf die Hälfte der Abtastperiode festgelegt ist, derart, dass die Abtastfrequenz durch Verarbeiten des abzutastenden Signals (52) auf zwei parallelen Wegen verdoppelt wird.

10. Abtastsystem nach einem der Ansprüche 7 bis 9, **dadurch gekennzeichnet, dass** die Ausgänge der zwei elektrooptischen Kommutatoren (12 und 21) mit optischen Detektoren (54 und 62) und mit Analog/Digital-Umsetzungssystemen (56 und 63) verbunden sind.
